(19) **Europäisches Patentamt European Patent Office Office européen des brevets**

(11) **EP 3 409 016 B1**

(12) **FASCICULE DE BREVET EUROPEEN**

(45) Date de publication et mention de la délivrance du brevet:
**13.05.2026 Bulletin 2026/20**

(21) Numéro de dépôt: **17706534.9**

(22) Date de dépôt: **17.01.2017**

(51) Classification Internationale des Brevets (IPC):
*H04N 19/13* (2014.01)    *H04N 19/91* (2014.01)
*H04N 19/176* (2014.01)    *H04N 19/46* (2014.01)
*H04N 19/18* (2014.01)    *H04N 19/70* (2014.01)
*H04N 19/136* (2014.01)

(52) Classification Coopérative des Brevets (CPC):
**H04N 19/176; H04N 19/13; H04N 19/136; H04N 19/18; H04N 19/46; H04N 19/70; H04N 19/91**

(86) Numéro de dépôt international:
**PCT/FR2017/050094**

(87) Numéro de publication internationale:
**WO 2017/129880 (03.08.2017 Gazette 2017/31)**

(54) **PROCÉDÉ DE DÉCODAGE DE DONNÉES, DISPOSITIF DE DÉCODAGE DE DONNÉES ET PROGRAMMES D'ORDINATEUR CORRESPONDANTS**

VERFAHREN ZUR DECODIERUNG VON DATEN, VORRICHTUNG ZUR DECODIERUNG VON DATEN UND ENTSPRECHENDE COMPUTERPROGRAMME

METHOD FOR DECODING DATA, DEVICE FOR DECODING DATA, AND CORRESPONDING COMPUTER PROGRAMS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.01.2016 FR 1650758**

(43) Date de publication de la demande:
**05.12.2018 Bulletin 2018/49**

(73) Titulaire: **Orange**
**92130 Issy-les-Moulineaux (FR)**

(72) Inventeurs:
• **HENRY, Félix**
**35760 Saint Grégoire (FR)**
• **CLARE, Gordon**
**35740 Pace (FR)**

(56) Documents cités:
**US-A1- 2015 195 568**

• **WEN YANG ET AL: "Motion vector coding algorithm based on adaptive template matching", 2010 IEEE INTERNATIONAL WORKSHOP ON MULTIMEDIA SIGNAL PROCESSING (MMSP '10), SAINT MALO, FRANCE, 4-6 OCT. 2010, IEEE, IEEE, PISCATAWAY, USA, 4 October 2010 (2010-10-04), pages 222 - 227, XP031830586, ISBN: 978-1-4244-8110-1**
• **HENRY F ET AL: "Residual Coefficient Sign Prediction", 4. JVET MEETING; 15-10-2016 - 21-10-2016; CHENGDU; (THE JOINT VIDEO EXPLORATION TEAM OF ISO/IEC JTC1/SC29/WG11 AND ITU-T SG.16 ); URL: HTTP://PHENIX. INT-EVRY.FR/JVET/,, no. JVET-D0031-v4, 20 October 2016 (2016-10-20), XP030150258**

- J-M THIESSE ET AL: "Rate Distortion Data Hiding of Motion Vector Competition Information in Chroma and Luma Samples for Video Compression", IEEE TRANSACTIONS ON CIRCUITS AND SYSTEMS FOR VIDEO TECHNOLOGY, IEEE SERVICE CENTER, PISCATAWAY, NJ, US, vol. 21, no. 6, 1 June 2011 (2011-06-01), pages 729 - 741, XP011480312, ISSN: 1051-8215, DOI: 10.1109/TCSVT.2011.2130330

- CHEN J ET AL: "Non-CE1: throughput improvement on CABAC coefficients level coding", 8. JCT-VC MEETING; 99. MPEG MEETING; 1-2-2012 - 10-2-2012; SAN JOSE; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-H0554, 24 January 2012 (2012-01-24), XP030111581

## Description

<u>Domaine de l'invention</u>

La présente invention se rapporte de manière générale au domaine du codage et du décodage de données.

L'invention peut ainsi notamment s'appliquer au codage d'images numériques et de séquences d'images numériques, tel que mis en œuvre dans les codeurs vidéo actuels AVC (abréviation anglaise de « Advanced Video Coding ») et HEVC (abréviation anglaise de « High Efficiency Video Coding») et leurs extensions (MVC, 3D-AVC, MV-HEVC, 3D-HEVC, etc...), et au décodage correspondant.

<u>Arrière-plan de l'invention</u>

Les codeurs vidéo actuels (MPEG, H.264, HEVC, ...) utilisent une représentation par blocs de la séquence vidéo. Les images sont découpées en blocs, lesquels sont susceptibles d'être redécoupés de façon récursive. Puis chaque bloc est codé par prédiction intra-images ou inter-images. Ainsi, certaines images sont codées par prédiction spatiale (prédiction Intra), d'autres images sont également codées par prédiction temporelle (prédiction Inter) par rapport à une ou plusieurs images de référence codées-décodées, à l'aide d'une compensation en mouvement connue par l'homme de l'art.

Pour chaque bloc est codé un bloc résidu, encore appelé résidu de prédiction, correspondant au bloc original diminué d'une prédiction. Les blocs résidus sont transformés à l'aide d'une opération mathématique de transformée, puis quantifiés à l'aide d'une opération mathématique de quantification par exemple de type scalaire. Une liste monodimensionnelle de coefficients est obtenue à l'issue de la quantification.

Les coefficients de cette liste sont alors codés sous forme de bits par un codage entropique dont le but est de coder les coefficients sans perte.

Les bits obtenus après codage entropique sont inscrits dans un signal ou flux de données qui est destiné à être transmis au décodeur.

De façon connue en soi, un tel signal comprend :

- les coefficients quantifiés contenus dans la liste précitée,
- des informations représentatives du mode de codage utilisé, en particulier:

  - le mode de prédiction (prédiction Intra, prédiction Inter, prédiction par défaut réalisant une prédiction pour laquelle aucune information n'est transmise au décodeur (« en anglais « skip »)) ;
  - des informations précisant le type de prédiction (orientation, image de référence, ...) ;
  - le type de découpage du bloc ;

  - les informations de mouvement si nécessaire ;
  - etc.

Une fois que le flux a été reçu par le décodeur, le décodage est fait image par image, et pour chaque image, bloc par bloc. Pour chaque bloc, les éléments correspondants du flux sont lus. La quantification inverse, l'opération de parcours inverse, et la transformée inverse des coefficients des blocs sont effectuées pour produire le résidu de prédiction décodé. Puis, la prédiction du bloc est calculée et le bloc est reconstruit en ajoutant la prédiction au résidu de prédiction décodé.

Plus particulièrement lors d'un codage de données de type HEVC, le codage entropique précité, qui peut être par exemple de type arithmétique ou de Huffman, est effectué de la façon suivante :

- une information de signifiance, indiquant si chaque coefficient est nul ou pas, est codée. Un élément de syntaxe « significant_coeff = 0 » est compressé par codage entropique si le coefficient est nul. Un élément de syntaxe « significant_coeff = 1 » est compressé par codage entropique si le coefficient est non nul ;
- pour chaque coefficient non nul, un élément de syntaxe « greater_than_one » est codé par codage entropique, qui indique si le coefficient courant est supérieur à 1 :
- pour chaque coefficient pour lequel l'élément de syntaxe « greater_than_one » vaut 1, un élément de syntaxe « greater_than_two » est codé par codage entropique, qui indique si le coefficient courant est supérieur à 2;
- pour chaque coefficient pour lequel l'élément de syntaxe « greater_than_two » vaut 1, un élément de syntaxe « remaing_level » est codé par codage entropique, qui indique l'amplitude du coefficient, diminuée de 3 ;
- pour chaque coefficient non nul, un élément de syntaxe « sign » est codé par codage entropique, qui indique le signe de cet élément.

Un inconvénient d'un tel codage est que le signal de données codées à transmettre à un décodeur contient un nombre de données non négligeable, ce qui ne permet pas d'optimiser la réduction du gain en compression des données codées. Il en résulte des performances de compression qui ne sont pas satisfaisantes.

Il est par ailleurs connu du document US 2015/195568, lors du codage d'un ensemble de données d'image, de ne pas coder une des données de cet ensemble, en cachant cette donnée dans la parité de la somme des données de cet ensemble.

<u>Objet et résumé de l'invention</u>

Un des buts de l'invention est de remédier à des inconvénients de l'état de la technique précité.

L'invention est définie par les revendications. Dans la suite, l'expression "mode de réalisation" doit être comprise comme désignant un exemple permettant d'illustrer l'invention, à moins qu'elle ne se réfère précisément à l'invention telle que définie dans les revendications.

A cet effet, un exemple concerne un procédé de codage de données sous la forme d'un signal de données, qui est remarquable en ce que, pour un ensemble de données courant, il met en œuvre ce qui suit :

- codage des données de l'ensemble, à l'exception d'au moins une donnée de l'ensemble,
- détermination d'une information représentative d'une caractéristique des données codées, l'information étant destinée à permettre la reconstruction de toutes les données de l'ensemble,

- élaboration d'au moins une partie de signal contenant les données de l'ensemble qui ont été codées.

Une telle disposition permet avantageusement d'appliquer au codage une technique d'omission de données à un grand nombre de données contenues dans un ensemble de données à coder, en fonction de la valeur d'une information représentative d'une caractéristique des données codées de cet ensemble, laquelle information va permettre au décodeur de retrouver toutes les données qui ont été omises lors du codage. Il est ainsi possible, en cachant ces nombreuses données, de réduire sensiblement le coût de signalisation.

Une telle information représentative d'une caractéristique des données codées dudit ensemble de données consiste par exemple dans le nombre de données codées, dans la parité de la somme de données codées, dans la taille de l'ensemble de données codées, dans le nombre de données non nulles de cet ensemble.

Dans un mode de réalisation particulier, le procédé de codage selon l'invention comprend, à la suite du codage des données de l'ensemble de données, à l'exception de la au moins une donnée de l'ensemble, ce qui suit :

- détermination d'au moins une première et une deuxième valeur d'au moins une donnée nécessaire au décodage des données codées,
- décodage des données contenues dans la au moins une partie de signal, à partir de la première valeur de la au moins une donnée, à l'issue duquel est obtenue une première caractéristique des données décodées,
- décodage des données contenues dans la au moins une partie de signal, à partir de la deuxième valeur de la au moins une donnée, à l'issue duquel est obtenue une deuxième caractéristique des données décodées,
- comparaison de chacune des première et deuxième caractéristiques des données décodées avec l'information représentative d'une caractéristique des données codées,
- dans le cas où chacune des première et deuxième caractéristiques des données décodées est égale à l'information représentative d'une caractéristique des données codées, sélection de celle des première et deuxième valeurs de la au moins une donnée nécessaire au décodage des données codées, qui permet une reconstruction sans erreur des données de l'ensemble,
- lors de l'élaboration de la partie de signal, insertion dans la partie de signal d'une information représentative de la sélection mise en œuvre.

Une telle disposition permet au codeur de résoudre le conflit qui peut apparaître à l'issue de la comparaison, dans le cas où les première et deuxième caractéristiques des données décodées sont autant compatibles l'une que l'autre avec l'information représentative d'une caractéristique des données codées.

A cet effet, le codeur simule un premier type et un deuxième type de décodage des données codées, contenues dans la partie de signal, afin de sélectionner, parmi le premier et le deuxième type de décodage, lequel est compatible avec l'information représentative d'une caractéristique des données codées.

De façon avantageuse, une information représentative de cette sélection est insérée dans le signal de données à transmettre au décodeur.

Corrélativement, un autre exemple concerne encore un dispositif de codage de données sous la forme d'un signal de données, qui est remarquable en ce qu'il comprend un circuit de traitement qui, pour un ensemble de données courant, est agencé pour :

- coder les données de l'ensemble, à l'exception d'au moins une donnée dudit ensemble,
- déterminer une information représentative d'une caractéristique des données codées, l'information étant destinée à permettre la reconstruction de toutes les données de l'ensemble,
- élaborer au moins une partie de signal contenant les données de l'ensemble qui ont été codées.

De façon correspondante, un autre exemple concerne un procédé de décodage d'un signal de données codées, qui est remarquable en ce que, pour au moins une partie du signal, il met en œuvre ce qui suit :

- détermination d'une information représentative d'une caractéristique des données codées contenues dans la au moins une partie de signal,
- détermination d'au moins une première et une deuxième valeur d'au moins une donnée nécessaire au décodage des données de la au moins une partie de signal,
- décodage des données contenues dans la au moins une partie de signal à partir de la première valeur de la au moins une donnée, à l'issue duquel est obtenue une première caractéristique des données décodées,

- décodage des données contenues dans la au moins une partie de signal à partir de la deuxième valeur de la au moins une donnée, à l'issue duquel est obtenue une deuxième caractéristique des données décodées,

- sélection de la première ou de la deuxième valeur de la au moins une donnée, en fonction de l'information représentative d'une caractéristique des données codées contenues dans la au moins une partie de signal et en fonction des première et deuxième caractéristiques des données décodées,

- reconstruction des données de la au moins une partie de signal à partir de la première ou de la deuxième valeur de la au moins une donnée, qui a été sélectionnée.

Une telle disposition permet avantageusement au décodeur de reconstruire de façon autonome toutes les données associées à la au moins une partie de signal qui n'ont pas été codées et qui ont été omises par le codeur, grâce :

- à la détermination de l'information représentative d'une caractéristique des données codées contenues dans la au moins une partie de signal, puis

- à la sélection, parmi au moins deux combinaisons de décodage possibles mises en œuvre au décodeur, de la combinaison de décodage correcte n'entraînant pas de désynchronisation par rapport au codeur, à partir de cette information déterminée.

L'information représentative d'une caractéristique des données codées contenues dans la au moins une partie de signal peut selon le contexte de codage/décodage :

- soit être lue par le décodeur dans la au moins une partie de signal.

- soit être déduite par le décodeur, si par exemple la au moins une partie de signal est la dernière partie du signal de données que doit décoder le décodeur.

Dans un mode de réalisation particulier, la sélection de la première ou de la deuxième valeur de la au moins une donnée nécessaire au décodage des données de la au moins une partie de signal est mise en œuvre :

- par comparaison de chacune des première et deuxième caractéristiques des données décodées avec l'information représentative d'une caractéristique des données codées contenues dans la au moins une partie de signal, qui a été déterminée,

- par sélection, parmi les première et deuxième caractéristiques des données décodées, de celle qui est égale à l'information représentative d'une caractéristique des données codées contenues dans la au moins une partie de signal.

Le décodeur met ainsi en œuvre une comparaison de l'information représentative d'une caractéristique des données codées contenues dans la au moins une partie de signal avec les résultats d'au moins deux combinaisons de décodage possibles des données de la au moins une partie de signal, de façon à sélectionner la combinaison correcte, c'est-à-dire la plus compatible avec cette information.

Dans un mode de réalisation particulier, dans le cas où chacune des première et deuxième caractéristiques des données décodées est égale à l'information représentative d'une caractéristique des données codées contenues dans la au moins une partie de signal, la sélection de la première ou de la deuxième valeur de la au moins une donnée nécessaire au décodage des données de la au moins une partie de signal est mise en œuvre par détermination, dans la au moins une partie de signal, d'une information représentative de la sélection à appliquer entre la première ou la deuxième valeur.

Une telle disposition permet avantageusement au décodeur d'identifier directement dans la au moins une partie de signal reçue, la combinaison de décodage correcte à appliquer.

Corrélativement, un autre exemple concerne encore un dispositif de décodage d'un signal de données codées, qui est remarquable en ce qu'il comprend un circuit de traitement qui, pour au moins une partie du signal, est agencé pour :

- déterminer une information représentative d'une caractéristique des données codées contenues dans la au moins une partie de signal,

- déterminer au moins une première et une deuxième valeur d'au moins une donnée nécessaire au décodage des données de la au moins une partie de signal,

- décoder les données contenues dans la au moins une partie de signal à partir de la première valeur de la au moins une donnée, à l'issue duquel est obtenue une première caractéristique des données décodées,

- décoder les données contenues dans la au moins une partie de signal à partir de la deuxième valeur de la au moins une donnée, à l'issue duquel est obtenue une deuxième caractéristique des données décodées,

- sélectionner la première ou la deuxième valeur de la au moins une donnée, en fonction de l'information représentative d'une caractéristique des données codées contenues dans la au moins une partie de signal et en fonction des première et deuxième caractéristiques des données décodées,

- reconstruire les données de la au moins une partie de signal à partir de la première ou de la deuxième valeur de la au moins une donnée, qui a été sélectionnée.

Les différents modes ou caractéristiques de réalisation précités peuvent être ajoutés indépendamment ou en combinaison les uns avec les autres, aux opérations mises en œuvre au cours du procédé de décodage tel que défini ci-dessus.

L'invention vise également un programme d'ordinateur comportant des instructions pour l'exécution des étapes du procédé de codage ou de décodage ci-dessus, lorsque le programme est exécuté par un ordinateur.

Un tel programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Encore un autre objet de l'invention vise aussi un support d'enregistrement lisible par un ordinateur, et comportant des instructions de programmes d'ordinateur tels que mentionnés ci-dessus.

L'invention vise également un support d'enregistrement lisible par un ordinateur sur lequel est enregistré un programme d'ordinateur, ce programme comportant des instructions adaptées à la mise en œuvre du procédé de codage ou de décodage selon l'invention, tels que décrits ci-dessus.

Le support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, une clé USB, ou un moyen d'enregistrement magnétique, par exemple un disque dur.

D'autre part, le support d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'enregistrement peut être un circuit intégré dans lequel le programme est incorporé, le circuit étant adapté pour exécuter ou pour être utilisé dans l'exécution du procédé de codage ou de décodage précité.

Brève description des dessins

D'autres caractéristiques et avantages apparaîtront à la lecture d'un mode de réalisation préféré décrit en référence aux figures dans lesquelles:

- la figure 1 représente les principales étapes du procédé de codage selon l'invention,
- la figure 2 représente un mode de réalisation optionnel du procédé de codage de la figure 1,
- la figure 3 représente un mode de réalisation d'un dispositif de codage selon l'invention,
- la figure 4 représente les principales étapes du procédé de décodage selon l'invention,
- la figure 5 représente de façon détaillée l'une des étapes du procédé de décodage de la figure 4,
- la figure 6 représente un mode de réalisation d'un dispositif de décodage selon l'invention.

Description détaillée de la partie codage

De façon générale, la présente invention s'applique au codage de données numériques de différent type, telles que par exemple des données audio, des données d'image ou encore des données vidéo.

Selon un mode de réalisation de l'invention, le procédé de codage de données qui va maintenant être décrit est utilisé pour coder une image selon un signal de données binaire proche de celui qu'on obtient par un codage conforme à l'une quelconque des normes de codage vidéo actuelles ou à venir.

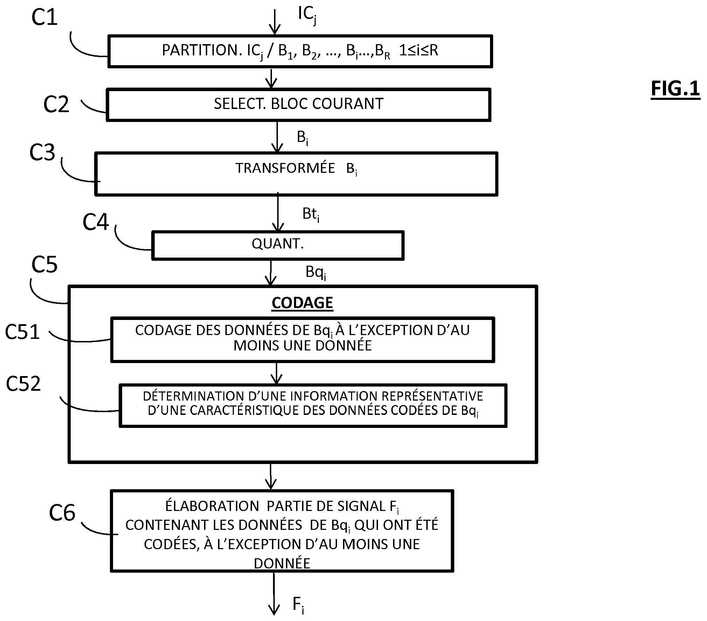

Dans ce mode de réalisation, le procédé de codage selon l'invention est par exemple implémenté de manière logicielle ou matérielle par modifications d'un codeur initialement conforme à la norme HEVC. Le procédé de codage selon l'invention est représenté sous la forme d'un algorithme comportant des étapes C1 à C6 telles que représentées à la figure 1.

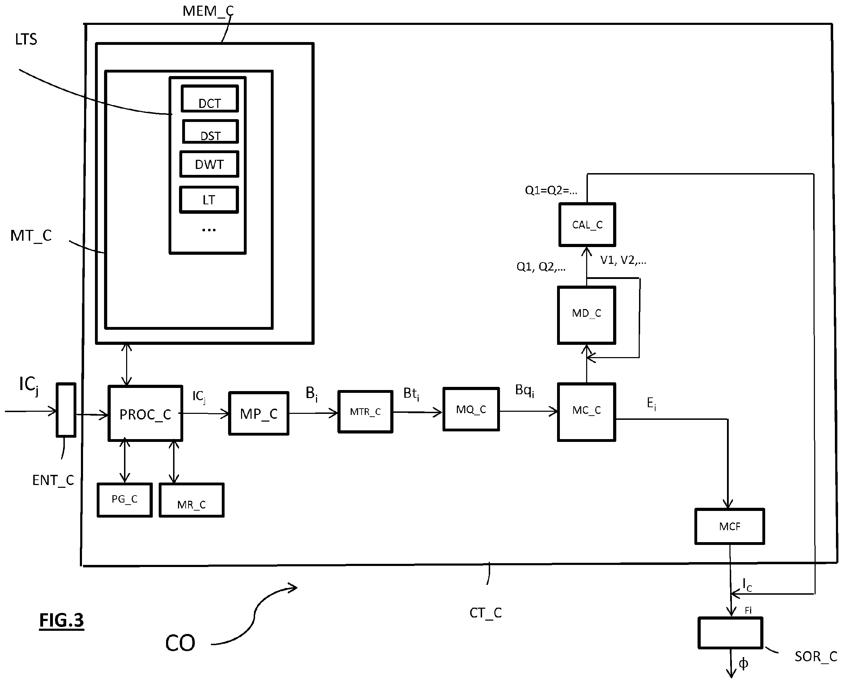

Selon le mode de réalisation de l'invention, le procédé de codage selon l'invention est implémenté dans un dispositif de codage CO représenté à la figure 3.

Comme illustré en figure 3, un tel dispositif codeur comprend :

- une entrée ENT_C pour recevoir une image courante à coder,
- un circuit de traitement CT_C pour mettre en œuvre le procédé de codage selon l'invention, le circuit de traitement CT_C contenant :

  • une mémoire MEM_C comprenant une mémoire tampon MT_C,
  • un processeur PROC_C piloté par un programme d'ordinateur PG_C,

- une sortie SOR_C pour délivrer un signal codé contenant les données obtenues à l'issue du codage de l'image courante.

A l'initialisation, les instructions de code du programme d'ordinateur PG_C sont par exemple chargées dans une mémoire RAM, MR_C, avant d'être exécutées par le circuit de traitement CT_C.

Le procédé de codage représenté sur la figure 1 s'applique à toute image courante $IC_j$ fixe ou bien faisant partie d'une séquence de L images $IC_1$, ..., $IC_j$,..., $IC_L$ ($1 \leq j \leq L$) à coder.

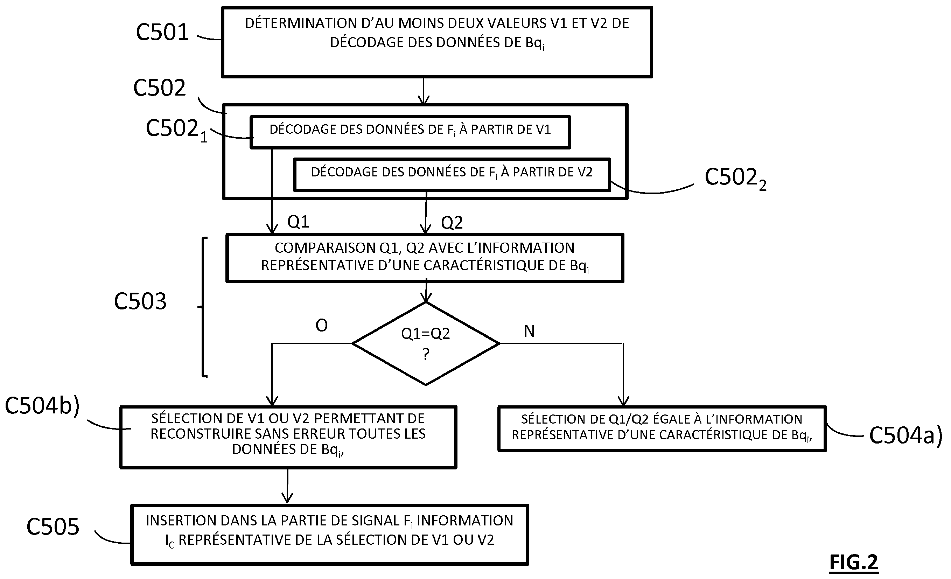

Au cours d'une étape C1 représentée à la figure 1, il est procédé, de façon connue en soi, au partitionnement d'une image courante $IC_j$ en une pluralité d'ensemble de données $B_1$, $B_2$, ..., $B_i$,..., $B_R$ ($1 \leq i \leq R$) qui sont des blocs de pixels, par exemple de taille 4x4 pixels. Une telle étape de partitionnement est mise en œuvre par un dispositif de partitionnement MP_C représenté sur la figure 2, lequel dispositif est piloté par le processeur PROC_C.

Il convient de noter qu'au sens du mode de réalisation décrit ici, le terme « bloc » signifie unité de codage (de l'anglais « coding unit »). Cette dernière terminologie est notamment utilisée dans la norme HEVC « ISO/IEC/23008-2 Recommandation ITU-T H.265 High Efficiency Video Coding (HEVC) ».

En particulier, une telle unité de codage regroupe des ensembles de pixels de forme rectangulaire ou carrée, encore appelés blocs ou macroblocs.

Une telle unité de codage pourrait, dans une norme future, regrouper également des ensembles de pixels présentant d'autres formes géométriques.

Lesdits blocs $B_1$, $B_2$, ..., $B_i$,..., $B_R$ sont destinés à être codés selon un ordre de parcours prédéterminé, qui est par exemple du type lexicographique. Cela signifie que les blocs sont codés les uns après les autres, de la gauche vers la droite, puis du haut vers le bas.

D'autres types de parcours sont bien sûr possibles. Ainsi, il est possible de découper l'image $IC_j$ en plusieurs sous-images appelées slices et d'appliquer indépendamment un découpage de ce type sur chaque sous-image. Il est également possible de coder non pas une succession de lignes, comme expliqué ci-dessus, mais une succession de colonnes. Il est également possible de parcourir les lignes ou colonnes dans un sens ou dans l'autre.

Chaque bloc peut par ailleurs être lui-même divisé en sous blocs qui sont eux-mêmes subdivisibles.

Au cours d'une étape C2 représentée à la figure 1, le codeur CO sélectionne comme bloc courant un premier bloc à coder $B_i$ de l'image $IC_j$, tel que par exemple le premier bloc $B_1$.

Au cours d'une étape C3 de la figure 1, il est procédé à l'application d'une transformée aux données du bloc courant $B_i$.

Dans l'exemple décrit ici, on entend par données, les pixels du bloc courant $B_i$.

Il convient toutefois de noter qu'on entend également par données, les pixels d'un bloc prédit obtenu à l'aide d'une prédiction du bloc courant $B_i$ par rapport à un bloc prédicteur qui est sélectionné suite à une mise en compétition de différents modes de prédiction inter, intra ou autres prédéterminés, par exemple par minimisation d'un critère débit distorsion bien connu de l'homme du métier.

De façon connue en soi, en fonction du contexte ou de la norme de codage utilisé, une telle transformée est par exemple une transformée de type DCT (abréviation anglaise de « Discrete Cosine Transform »), DST (abréviation anglaise de « Discrete Sine Transform »), de type DWT (abréviation anglaise de « Discrete Wavelet Transform ») ou encore de type LT (abréviation anglaise de « Lapped Transform »). Ces transformées sont stockées préalablement dans une liste LTS, dans la mémoire tampon MT_C du codeur CO de la figure 2.

A l'issue de l'étape C3 est obtenu un bloc de données transformé $Bt_i$.

Une telle opération est effectuée par un dispositif MTR_C de calcul de transformée, tel que représenté figure 3, lequel dispositif est piloté par le processeur PROC_C.

Au cours d'une étape C4 représentée à la figure 1, il est procédé à la quantification des données du bloc transformé $Bt_i$ selon une opération classique de quantification, telle que par exemple une quantification scalaire ou vectorielle. Un bloc $Bq_i$ de coefficients quantifiés est alors obtenu.

L'étape C4 est mise en œuvre par un dispositif de quantification MQ_C tel que représenté à la figure 3, lequel dispositif est piloté par le processeur PROC_C.

Au cours d'une étape C5 représentée à la figure 1, il est procédé au codage des données du bloc $Bq_i$ de coefficients quantifiés. L'étape C5 est mise en œuvre par un dispositif de codage MC_C représenté sur la figure 3, lequel dispositif est piloté par le processeur PROC_C.

Plus particulièrement lors d'un codage de données de type HEVC, qui peut être par exemple de type arithmétique ou de Huffman, les données du bloc quantifié $Bq_i$ aptes à être codées sont déterminées de la façon suivante:

- une donnée de signifiance, indiquant si chaque coefficient est nul ou pas. Cette donnée est un élément de syntaxe « significant_coeff » qui est mis à 0 si le coefficient est nul ou qui est mis à 1 si le coefficient est non nul ;
- pour chaque coefficient non nul, une donnée « greater_than_one » qui est un élément de syntaxe indiquant si le coefficient courant du bloc courant quantifié $Bq_i$ est strictement supérieur à 1 ;
- pour chaque coefficient pour lequel l'élément de syntaxe « greater_than_one » vaut 1, une donnée « greater_than_two » qui est un élément de syntaxe indiquant si le coefficient courant est strictement supérieur à 2 ;
- pour chaque coefficient pour lequel l'élément de syntaxe « greater_than_two » vaut 1, une donnée « remaing_level » qui est un élément de syntaxe indiquant l'amplitude du coefficient, diminuée de 3 ;
- pour chaque coefficient non nul, une donnée « sign » qui est un élément de syntaxe indiquant le signe du coefficient non nul considéré.

Au cours d'une sous-étape C51 de la figure 1, il est procédé au codage des coefficients du bloc quantifié $Bq_i$, à l'exception d'au moins une donnée de ce dernier. Un ensemble $E_i$ de données codées est alors obtenu.

Selon l'invention, le choix de ladite au moins une donnée du bloc quantifié $Bq_i$ à ne pas coder est prédéterminé au codeur.

Par exemple, dans le cas d'un codage HEVC, ladite au moins une donnée qui n'est pas codée est par exemple le premier élément de syntaxe « greater_than_one ». Selon le contexte de codage, un tel choix prédéterminé peut se porter sur le deuxième élément de syntaxe « greater_than_one », les deux premiers éléments de syntaxe « greater_than_one », etc...

On considère, dans l'exemple représenté, que le premier élément de syntaxe « greater_than_one » a une valeur V1.

Alternativement, il peut s'agir de l'élément de syntaxe « greater_than_two », de l'élément de syntaxe « significant_coeff », de l'élément de syntaxe « remaining_level » ou encore de l'élément de syntaxe « sign ». Dans un mode alternatif de réalisation, il peut s'agir d'un autre élément de syntaxe, comme un mode de prédiction intra, un indicateur de mode de prédiction intra ou inter, ou encore un vecteur de mouvement.

Selon l'invention, au cours d'une sous-étape C52 de la figure 1, est déterminée une information « reference_trace » qui est un élément de syntaxe représentatif d'une caractéristique des données codées du bloc quantifié $Bq_i$.

Selon un exemple, les éléments de syntaxe déterminés lors du codage du bloc quantifié $Bq_i$ sont comptés et leur nombre constitue l'information « reference_trace ».

A titre de variante, l'information « reference_trace » peut indiquer :

- soit le nombre de bits produits après codage des éléments de syntaxe,
- soit la parité de la somme de la valeur des éléments de syntaxe,
- soit la taille du bloc quantifié $Bq_i$,
- soit l'énergie du bloc quantifié $Bq_i$.

A la suite de la sous-étape C52, au cours de l'étape C6 de la figure 1, il est procédé à la construction d'une partie de signal de données $F_i$ qui contient les données codées du bloc quantifié $Bq_i$ à l'exception de ladite au moins une donnée de ce bloc, telle que l'élément de syntaxe « greater_than_one » de valeur V1, dans l'exemple représenté.

L'étape C6 est mise en œuvre par un dispositif MCF de construction de signal de données, tel que représenté sur la figure 3, lequel dispositif est piloté par le processeur PROC_C.

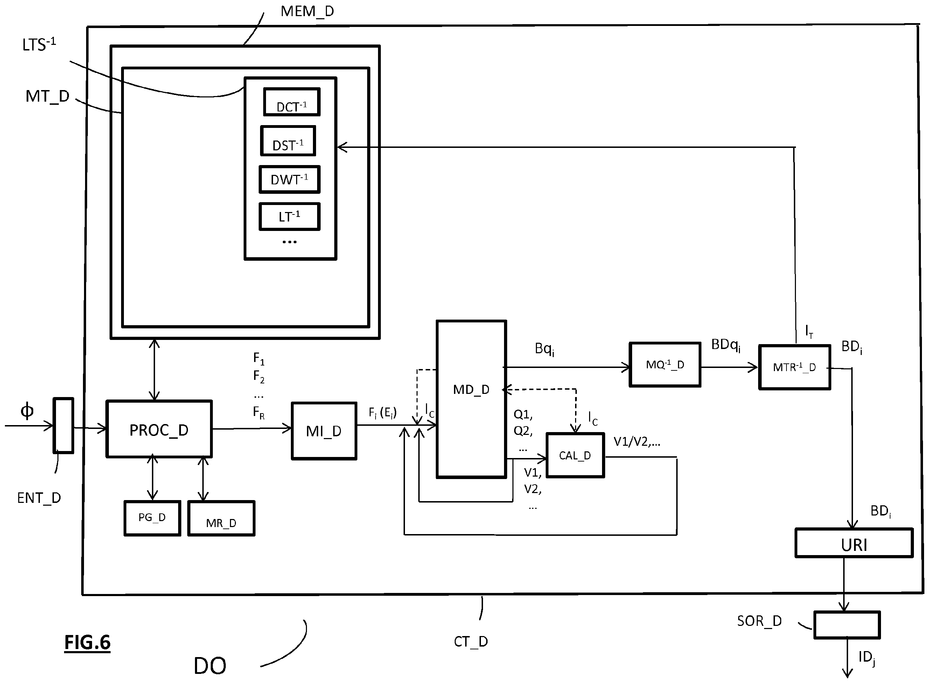

La partie de signal de données $F_i$ est ensuite délivrée via la sortie SOR_C du codeur CO de la figure 3. La partie de signal $F_i$ est soit stockée dans la mémoire tampon MT_C du codeur CO, soit transmise par un réseau de communication (non représenté) à un terminal distant. Celui-ci comporte un décodeur DO, tel que celui représenté à la figure 6 qui sera décrit plus loin.

De façon connue en soi, la partie de signal de données $F_i$ comprend en outre certaines informations encodées par le codeur CO, telles que le type de prédiction (Inter ou Intra) qui a été éventuellement appliqué, et le cas échéant, le mode de prédiction sélectionné, l'index du bloc prédicteur sélectionné, l'indice d'image de référence et le vecteur de mouvement utilisés dans le mode de prédiction Inter, un index $I_T$ associé à la transformée appliquée au cours de l'étape C3 précitée.

En outre, à l'étape C6, selon un mode réalisation possible, l'information « reference_trace » est insérée, sous forme compressée ou non, dans la partie de signal $F_i$. Selon un mode de réalisation alternatif, l'information « reference_trace » n'est pas insérée dans la partie de signal $F_i$.

Les étapes de codage C1 à C6 de la figure 1 sont ensuite mises en œuvre pour chacun des blocs $B_1$, $B_2$, ..., $B_i$,.... $B_R$ à coder de l'image courante $IC_j$ considérée, dans un ordre prédéterminé qui est par exemple l'ordre lexicographique. Un signal $\phi$ de données codées est alors délivré via la sortie SOR_C du codeur CO de la figure 3, ledit signal $\phi$ concaténant toutes les parties de signal $F_1$, $F_2$,..., $F_R$ correspondant respectivement aux blocs $B_1$, $B_2$, ..., $B_i$,..., $B_R$ qui ont été codés.

Selon un mode réalisation optionnel représenté à la figure 2, lorsque au moins une donnée du bloc quantifié courant $Bq_i$ n'est pas codée, au cours d'une étape C501, il est procédé à la détermination d'au moins une première valeur V1 et une deuxième valeur V2 d'au moins une donnée nécessaire au décodage des données du bloc quantifié courant $Bq_i$. Une telle donnée nécessaire au décodage des données du bloc quantifié courant $Bq_i$ est, dans l'exemple représenté, l'élément de syntaxe « greater_than_one » qui a la valeur V1.

Une telle étape est mise en œuvre par un dispositif de décodage MD_C représenté sur la figure 3, lequel dispositif est piloté par le processeur PROC_C.

Au cours d'une étape C502 de la figure 2, le dispositif de décodage MD_C de la figure 3 procède :

- en $C502_1$, au décodage des données contenues dans la partie de signal $F_i$, à partir de la première valeur V1 : une quantité Q1 d'éléments de syntaxe est alors obtenue, laquelle représente une première caractéristique des données décodées,
- en $C502_2$, au décodage des données contenues dans la partie de signal $F_i$, à partir de la deuxième valeur V2 : une quantité Q2 d'éléments de syntaxe est alors obtenue, laquelle représente une deuxième caractéristique des données décodées.

Les étapes $C502_1$ et $C502_2$ peuvent être mises en œuvre dans n'importe quel ordre.

Au cours d'une étape C503 de la figure 2, il est procédé à la comparaison de la quantité d'éléments de syntaxe Q1 et de la quantité d'éléments de syntaxe Q2 avec l'information « reference_trace ».

Dans le cas où la quantité d'éléments de syntaxe Q1 est différente de la quantité Q2 d'éléments de syntaxe, au cours d'une étape C504a) de la figure 2, il est procédé à la sélection de la quantité d'éléments de syntaxe Q1 ou Q2 qui est égale à l'information « reference_trace ».

Dans le cas où les quantités Q1 et Q2 d'éléments de syntaxe sont toutes les deux égales à l'information « reference_trace », au cours d'une étape C504b) de la figure 2, il est procédé à la sélection de la première valeur V1 ou de la deuxième valeur V2 de la donnée qui permet de reconstruire sans erreur tles données du bloc quantifié courant $Bq_i$.

Dans l'exemple représenté, il s'agit de la première valeur V1 de l'élément de syntaxe « greater_than_one ».

Les étapes C503 et C504a)/b) sont mises en œuvre par un dispositif de calcul CAL_C représenté sur la figure 3, lequel dispositif est piloté par le processeur PROC_C.

Au cours d'une étape C505 de la figure 2, uniquement dans le cas où les quantités Q1 et Q2 d'éléments de syntaxe sont toutes les deux égales à l'information « reference_trace », le dispositif MCF de construction de signal de données insère, dans la partie de signal $F_i$, une information « combination_id », notée $I_C$, de façon à indiquer la sélection de la valeur de décodage V1 opérée à l'étape C504b).

On va maintenant décrire une illustration du mode de réalisation optionnel décrit à la figure 2.

Par exemple, à partir de l'information « reference_trace », le dispositif de décodage MD_C de la figure 3 décode les éléments de syntaxe « signifiant_coeff » contenus dans l'ensemble $E_i$ de données codées associé au bloc $Bq_i$. A l'issue de ce décodage, est déduit le nombre d'éléments de syntaxe « greather_than_one » qui n'ont pas été codés à l'étape C51 de la figure 1. Si par exemple, il y a quatre éléments de syntaxe « signifiant_coeff » qui ont été décodés, il est déterminé, à l'issue de l'étape C501, qu'il y a donc quatre éléments de syntaxe « greater_than_one » à décoder.

Sont alors générées, au cours de l'étape C501, $2^4$ combinaisons possibles de valeurs de décodage des données du bloc $Bq_i$, soit seize valeurs V1, V2, ..., V16, telles que par exemple :

-

$$V1= \{0, 0, 0, 0\}$$

-

$$V2= \{0, 0, 0, 1\}$$

-

$$V3= \{0, 0, 1, 0\}$$

-

$$V16= \{1, 1, 1, 1\}.$$

Par exemple, il est supposé que parmi ces seize valeurs de décodage possibles, c'est la valeur V7, telle que par exemple V7= {0,1,1,0}, qui permet une reconstruction sans erreur des données du bloc quantifié $Bq_i$.

Au cours de l'étape C502 de la figure 2, le dispositif de décodage MD_C de la figure 3 procède :

- en $C502_1$, au décodage des données contenues dans la partie de signal $F_i$, à partir de la première valeur V1 : une quantité Q1 d'éléments de syntaxe est alors obtenue, laquelle représente une première caractéristique des données décodées,
- en $C502_2$, au décodage des données contenues dans la partie de signal $F_i$, à partir de la deuxième valeur V2 : une quantité Q2 d'éléments de syntaxe est alors obtenue, laquelle représente une deuxième caractéristique des données décodées,
- ...
- en $C502_{16}$, au décodage des données contenues dans la partie de signal $F_i$, à partir de la seizième valeur V16 : une quantité Q16 d'éléments de syntaxe est alors obtenue, laquelle représente une seizième caractéristique des données décodées.

Au cours de l'étape C503 de la figure 2, chacune des quantités Q1, Q2,..., Q16 d'éléments de syntaxe est comparée à la valeur de l'information « reference_trace ».

Si les seize quantités d'éléments de syntaxe sont toutes différentes, au cours de l'étape C504a) de la figure 2, est sélectionnée l'unique quantité d'éléments de syntaxe qui est égale à la valeur de l'information « reference_trace », soit la quantité d'éléments de syntaxe Q7 dans l'exemple représenté.

Si au moins deux quantités d'éléments de syntaxe sont égales, par exemple Q2 et Q7, au cours de l'étape C504b) de la figure 2, est sélectionnée parmi les valeurs de décodage V2 et V7, la valeur V7 qui, elle seule, permet de reconstruire sans erreur les données associées au bloc quantifié courant $Bq_i$.

Dans ce cas, au cours de l'étape C505 de la figure 2, le dispositif MCF de construction de signal de données insère, dans la partie de signal $F_i$, l'information « combination_id » représentative de la sélection de la valeur de décodage V7.

Description détaillée de la partie décodage

De façon générale, la présente invention s'applique au décodage d'un signal de données numériques codées de différent type, telles que par exemple des données audio, des données d'image ou encore des données vidéo.

Selon un mode de réalisation de l'invention, le procédé de décodage qui va maintenant être décrit est utilisé pour décoder un signal de données représentatif d'une image ou d'une séquence d'images, ledit signal étant apte à être décodé par un décodeur conforme à l'une quelconque des normes de décodage vidéo actuelles ou à venir.

Dans ce mode de réalisation, le procédé de décodage selon l'invention est par exemple implémenté de manière logicielle ou matérielle par modifications d'un tel décodeur, conforme par exemple à la norme HEVC.

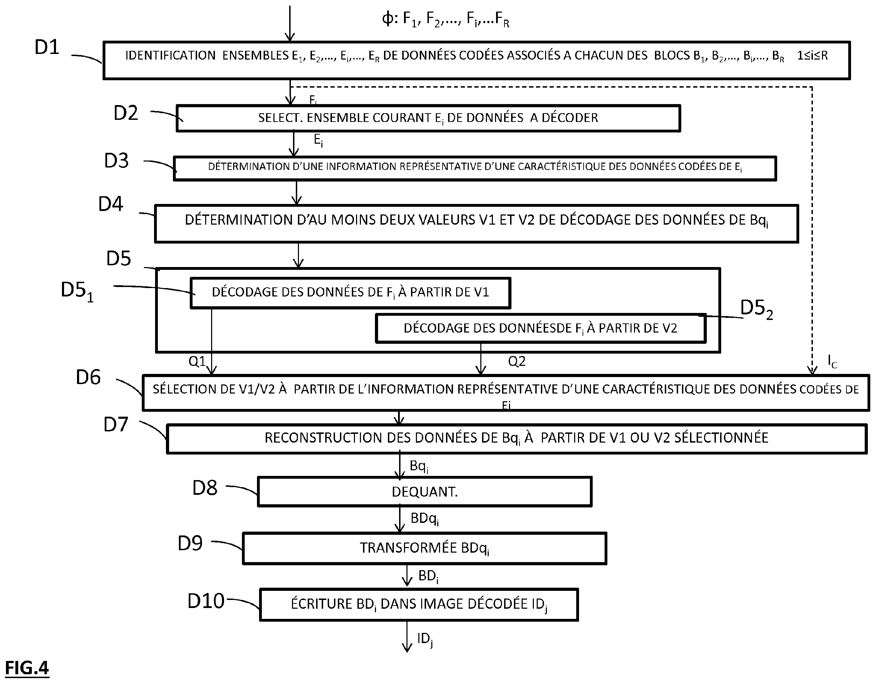

Le procédé de décodage selon l'invention est représenté sous la forme d'un algorithme comportant des étapes D1 à D10 telles que représentées à la figure 4.

Selon ce mode de réalisation, le procédé de décodage selon l'invention est implémenté dans un dispositif de décodage ou décodeur DO représenté à la figure 6.

Comme illustré en figure 6, un tel dispositif décodeur comprend :

- une entrée ENT_D pour recevoir le signal de données à décoder,
- un circuit de traitement CT_D pour mettre en œuvre le procédé de décodage selon l'invention, le circuit de traitement CT_D contenant :

  • une mémoire MEM_D comprenant une mémoire tampon MT_D,
  • un processeur PROC_D piloté par un programme d'ordinateur PG_D,

- une sortie SOR_D pour délivrer une image courante reconstruite contenant les données obtenues à l'issue du décodage selon le procédé de l'invention.

A l'initialisation, les instructions de code du programme d'ordinateur PG_D sont par exemple chargées dans une mémoire RAM, MR_D, avant d'être exécutées par le circuit de traitement CT_D.

Le procédé de décodage représenté sur la figure 4 s'applique à un signal de données $\phi$ représentatif d'une image courante $IC_j$ à décoder qui est fixe ou qui appartient à une séquence d'images à décoder.

A cet effet, des informations représentatives de l'image courante $IC_j$ à décoder sont identifiées dans le signal de données $\phi$ reçu à l'entrée ENT_D du décodeur DO et tel que délivré à l'issue du procédé de codage de la figure 1.

En référence à la figure 4, au cours d'une étape D1, il est procédé, de façon connue en soi, à la détermination dans le signal $\phi$ des différentes parties de signal $F_1$, $F_2$,..., $F_i$,..., $F_R$ correspondant respectivement à chacun des blocs $B_1$, $B_2$, ..., $B_i$,..., $B_R$ codés précédemment conformément à l'ordre lexicographique précité.

Une telle étape de détermination D1 est mise en œuvre par un dispositif d'identification MI_D d'analyse de flux, tel que représenté à la figure 6, lequel module est piloté par le processeur PROC_D.

Dans l'exemple représenté, les blocs $B_1$, $B_2$, ..., $B_i$,.... $B_R$ à décoder sont par exemple de taille 4x4 pixels.

Au cours d'une étape D2 représentée à la figure 4, le décodeur DO de la figure 6 sélectionne, comme bloc courant $B_i$ à décoder associé à la partie de signal $F_i$, l'ensemble $E_i$ de données codées qui a été obtenu à l'issue du procédé de codage de la figure 1 et éventuellement de la figure 2.

Au cours d'une étape D3 représentée à la figure 4, est déterminée une information « reference_trace » qui, comme cela a été mentionné plus haut en référence à la description du procédé de codage, est un élément de syntaxe représentatif d'une caractéristique des données constituant l'ensemble $E_i$ de données codées.

L'étape D3 est mise en œuvre par un dispositif de décodage MD_D représenté sur la figure 6, lequel dispositif est piloté par le processeur PROC_D.

Plus particulièrement lors d'un décodage de données de type HEVC, qui peut être par exemple de type arithmétique ou de Huffman, l'information « reference_trace » indique par exemple le nombre d'éléments de syntaxe qui ont été déterminés à la sous-étape C51 de codage de la figure 1, tels que « significant_coeff », « greater_than_one », « greater_than_two », « remaining_level » et « sign ».

A titre de variante, l'information « reference_trace » peut indiquer :

- soit le nombre de bits produits après codage des éléments de syntaxe précités,
- soit la parité de la somme de la valeur des éléments de syntaxe précités,
- soit la taille du bloc quantifié $Bq_i$ obtenu à l'issue de l'étape C4 de la figure 1.

Selon un mode de réalisation possible, l'information « reference_trace » est lue directement dans la partie de signal $F_i$, puis éventuellement décompressée si cette information a été compressée au codage.

Selon un mode de réalisation alternatif, l'information « reference_trace » est déduite de façon autonome par le dispositif de décodage MD_D. Une telle déduction est par exemple mise en œuvre dans le cas où le décodeur DO décode le dernier bloc $B_R$ de l'image courante $IC_j$. En effet, dans ce cas précis, et si l'information « reference_trace » indique le nombre d'éléments de syntaxe déterminés au codage pour le bloc $B_R$, le nombre d'éléments de syntaxe à décoder contenus dans la partie de signal $F1_R$ correspondante du signal $\phi$ de données codées correspond au nombre d'éléments de syntaxe qu'il reste à décoder dans le signal $\phi$.

Au cours d'une étape D4 représentée à la figure 4, le dispositif de décodage MD_D de la figure 6 détermine au moins une première valeur V1 et une deuxième valeur V2 d'au moins une donnée nécessaire au décodage des données contenues dans l'ensemble $E_i$.

Une telle donnée nécessaire au décodage des données contenues dans l'ensemble $E_i$ est, dans l'exem-

ple représenté d'un décodage HEVC, le premier élément de syntaxe « greater_than_one » qui a la valeur V1.

De façon correspondante au codeur, le choix d'un tel au moins un élément de syntaxe est prédéterminé au décodeur. Selon le contexte de codage, un tel choix prédéterminé peut se porter sur le deuxième élément de syntaxe « greater_than_one », les deux premiers éléments de syntaxe « greater_than_one », etc...

Alternativement, il peut s'agir de l'élément de syntaxe « greater_than_two », ou encore de l'élément de syntaxe « significant_coeff ».

Dans un mode alternatif de réalisation, il peut s'agir d'un autre élément de syntaxe, comme un mode de prédiction intra, un indicateur de mode de prédiction intra ou inter, ou encore un vecteur de mouvement.

Au cours d'une étape D5 de la figure 4, le dispositif de décodage MD_D de la figure 6 procède :

- en $D5_1$, au décodage des données contenues dans l'ensemble $E_i$, à partir de la première valeur V1 : une quantité Q1 d'éléments de syntaxe est alors obtenue, laquelle représente une première caractéristique des données décodées,

- en $D5_2$, au décodage des données contenues dans l'ensemble $E_i$, à partir de la deuxième valeur V2 : une quantité Q2 d'éléments de syntaxe est alors obtenue, laquelle représente une deuxième caractéristique des données décodées.

Les étapes $D5_1$ et $D5_2$ peuvent être mises en œuvre dans n'importe quel ordre.

Au cours d'une étape D6 de la figure 4, il est procédé, à partir de l'information « reference_trace », à la sélection de la valeur V1 ou V2 de ladite au moins une donnée nécessaire au décodage des données contenues dans l'ensemble $E_i$, c'est-à-dire de l'élément de syntaxe « greater_than_one » dans l'exemple représenté.

L'étape D6 est mise en œuvre par un dispositif de calcul CAL_D représenté sur la figure 6, lequel dispositif est piloté par le processeur PROC_D.

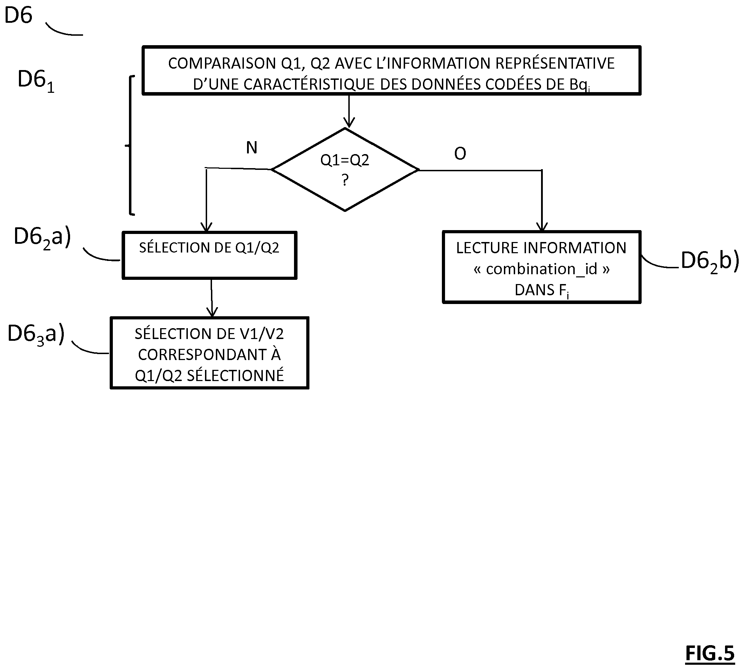

En référence à la figure 5, l'étape D6 se déroule de la façon suivante.

En $D6_1$, le dispositif de calcul CAL_D compare la quantité d'éléments de syntaxe Q1 et la quantité d'éléments de syntaxe Q2 avec l'information « reference_trace ».

Dans le cas où les quantités d'éléments de syntaxe Q1 et Q2 sont différentes :

- en $D6_2$a), le dispositif de calcul CAL_D procède à la sélection de la quantité d'éléments de syntaxe Q1 ou Q2 qui est égale à l'information « reference_trace »,
- en $D6_3$a), le dispositif de calcul CAL_D procède à la sélection de la valeur V1 ou V2 de ladite au moins une donnée nécessaire au décodage des données codées contenues dans l'ensemble $E_i$, qui correspond à la quantité d'éléments de syntaxe Q1 ou Q2 sélectionnée.

Dans l'exemple représenté, la valeur sélectionnée est la valeur V1 de l'élément de syntaxe « greater_than_one ».

Dans le cas où la quantité d'éléments de syntaxe Q1 et la quantité d'éléments de syntaxe Q2 sont toutes les deux égales à l'information « reference_trace », en $D6_2$b), le dispositif de décodage MD_D de la figure 6 lit préalablement dans la partie de signal $F_i$ l'information « combination_id », notée $I_C$, représentative de la sélection de la valeur V1 de l'élément de syntaxe « greater_than_one », telle qu'opérée à l'étape de codage C504b) de la figure 2, puis décompresse éventuellement l'information « combination_id » si cette dernière a été compressée au codage.

Le dispositif de décodage MD_D transmet alors l'information « combination_id » au dispositif de calcul CAL_D ou bien le dispositif de calcul CAL_D requiert cette information auprès du dispositif de décodage MD_D, quand la quantité d'éléments de syntaxe Q1 et la quantité d'éléments de syntaxe Q2 sont toutes les deux égales à l'information « reference_trace ».

Au cours d'une étape D7 de la figure 4, le dispositif de décodage MD_D de la figure 6 reconstruit les données de l'ensemble $E_i$ de données à partir de la valeur V1 ou V2 sélectionnée.

A l'issue de l'étape D7, est alors reconstruit le bloc de coefficients quantifiés $Bq_i$ qui a été obtenu à l'issue de l'étape de quantification C4 de la figure 1.

On va maintenant décrire une illustration du procédé de décodage qui vient d'être décrit ci-dessus.

A l'étape D3, l'information représentative d'une caractéristique de l'ensemble de données $E_i$ qui est déterminée est par exemple l'information « reference_trace ».

Au cours de l'étape D4 de la figure 4, le dispositif de décodage MD_D décode les éléments de syntaxe « signifiant_coeff » contenus dans l'ensemble $E_i$ de données codées associé au bloc $Bq_i$. A l'issue de ce décodage, est déduit le nombre d'éléments de syntaxe « greather_than_one » qui n'ont pas été codés à l'étape C51 de la figure 1. Si par exemple, il y a quatre éléments de syntaxe « signifiant_coeff » qui ont été décodés, à l'issue de l'étape D4, le dispositif de décodage MD_D en déduit, de façon prédéterminée, qu'il y a donc quatre éléments de syntaxe « greater_than_one » à décoder.

Sont alors générées, au cours de l'étape D4, $2^4$ combinaisons possibles de valeurs de décodage des données du bloc $Bq_i$, soit seize valeurs V1, V2, ..., V16, telles que par exemple :

-

$$V1 = \{0, 0, 0, 0\}$$

-

$$V2= \{0, 0, 0, 1\}$$

-

$$V3= \{0, 0, 1, 0\}$$

-

$$V16= \{1, 1, 1, 1\}.$$

Au cours de l'étape D5 de la figure 4, le dispositif de décodage MD_D de la figure 6 procède :

- en $D5_1$, au décodage des données contenues dans la partie de signal $F_i$, à partir de la première valeur V1 : une quantité Q1 d'éléments de syntaxe est alors obtenue, laquelle représente une première caractéristique des données décodées,
- en $D5_2$, au décodage des données contenues dans la partie de signal $F_i$, à partir de la deuxième valeur V2 : une quantité Q2 d'éléments de syntaxe est alors obtenue, laquelle représente une deuxième caractéristique des données décodées,
- ...
- en $D5_{16}$, au décodage des données contenues dans la partie de signal $F_i$, à partir de la seizième valeur V16 : une quantité Q16 d'éléments de syntaxe est alors obtenue, laquelle représente une seizième caractéristique des données décodées.

Au cours de l'étape $D6_1$ de la figure 5, chacune des quantités Q1, Q2,..., Q16 d'éléments de syntaxe est comparée à la valeur de l'information « reference_trace ».
Dans le cas où les seize quantités d'éléments de syntaxe sont toutes différentes l'une de l'autre, au cours de l'étape D6$_2$a) de la figure 5, est sélectionnée la quantité d'éléments de syntaxe qui est égale à la valeur de l'information « reference_trace ». Dans l'exemple représenté, il s'agit de la quantité d'éléments de syntaxe Q7.
Au cours de l'étape D6$_3$a) de la figure 5, est sélectionnée la valeur V7, telle que par exemple V7= {0,1,1,0}, correspondant à la quantité d'éléments de syntaxe Q7 qui est sélectionnée.
Dans le cas où au moins deux quantités d'éléments de syntaxe sont toutes les deux égales à l'information « reference_trace », par exemple Q2 et Q7, au cours de l'étape D6$_2$b), le dispositif de décodage MD_D de la figure 6 lit préalablement dans la partie de signal $F_i$ l'information « combination_id », représentative de la sélection de la valeur de décodage correspondante V7 qui a été mise en œuvre au codage, puis décompresse éventuellement l'information « combination_id » si cette dernière a été compressée au codage.
Au cours de l'étape D7 de la figure 4, le dispositif de décodage MD_D de la figure 6 reconstruit les données de l'ensemble $E_i$ de données codées à partir de la valeur V7 sélectionnée.
Au cours d'une étape D8 de la figure 4, il est procédé à une déquantification du bloc de coefficients quantifiés $Bq_i$, selon une opération classique de déquantification qui est l'opération inverse de la quantification mise en œuvre lors de l'étape de quantification C4 de la figure 1. Un ensemble de coefficients déquantifiés courant $BDq_i$ est alors obtenu à l'issue de l'étape D8. Une telle étape de déquantification est par exemple de type scalaire ou vectoriel.
L'étape D8 est mise en œuvre au moyen d'un dispositif $MQ^{-1}\_D$ de quantification inverse, tel que représenté à la figure 6, lequel dispositif est piloté par le processeur PROC_D.
Au cours d'une étape D9 représentée à la figure 4, il est procédé à l'application d'une transformée à l'ensemble de coefficients déquantifiés courant $BDq_i$ tel qu'obtenu à l'étape D8 précitée. De façon connue en soi, une telle transformée est une transformée inverse de celle appliquée au codage à l'issue de l'étape C3 de la figure 1, telle que par exemple une transformée DCT, DST, DWT, LT ou autres. De façon correspondante au codeur CO de la figure 3, ces transformées font partie d'une liste $LTS^{-1}$ de transformées qui est stockée préalablement dans la mémoire tampon MT_D du décodeur DO de la figure 6. Le type de transformée séparable à appliquer est déterminée au décodeur par lecture, dans la partie de signal de données $F_i$, de l'index $I_T$ de la transformée appliquée au codage au cours de l'étape C3 précitée (figure 1).
A l'issue de l'étape D9, est obtenu un bloc $BD_i$ de données décodées. Dans l'exemple décrit ici, on entend par données, les pixels du bloc décodé $BD_i$.
Il convient toutefois de noter qu'on entend également par données, les pixels d'un bloc résidu décodé dans le cas où une prédiction du bloc courant $B_i$ a été mise en œuvre au codage. Dans ce cas, un bloc $BD_i$ de données décodées est obtenu après avoir mis en œuvre une prédiction inverse de celle mise en œuvre au codage.
L'étape D9 est mise en œuvre par un dispositif $MTR^{-1}\_D$ de calcul de transformée, tel que représenté à la figure 6, lequel dispositif est piloté par le processeur PROC_D.
Au cours d'une étape D10 représentée à la figure 4, ledit bloc reconstruit courant $BD_i$ est écrit dans une image décodée $ID_j$.
Une telle étape est mise en œuvre par un dispositif URI de reconstruction d'image tel que représenté sur la figure 6, ledit dispositif étant piloté par le processeur PROC_D.
L'image décodée $ID_j$ est alors délivrée via la sortie SOR_D du décodeur DO de la figure 6, en vue par exemple de son affichage sur un écran.
Les étapes de décodage D1 à D10 qui viennent d'être décrites ci-dessus sont mises en œuvre pour tous

les blocs $B_1$, $B_2$, ..., $B_i$,..., $B_R$ à décoder de l'image courante $IC_j$ considérée, dans un ordre prédéterminé qui est par exemple l'ordre lexicographique.

Il va de soi que le mode de réalisation qui a été décrit ci-dessus a été donné à titre purement indicatif et nullement limitatif, et que de nombreuses modifications peuvent être facilement apportées par l'homme de l'art.

**Revendications**

1. Procédé de décodage d'un signal ($\phi$) de données d'image codées, dans lequel, pour au moins une partie ($F_i$) dudit signal contenant un bloc quantifié codé d'au moins une image, ledit bloc comprenant des coefficients quantifiés codés et des éléments de syntaxe associés auxdits coefficients quantifiés codés comprenant au moins des éléments suivants :

    - un élément de syntaxe *significant_coeff* indiquant si le coefficient considéré est nul ou non nul,
    - un élément de syntaxe *sign* indiquant le signe du coefficient considéré si ledit coefficient considéré est non nul ;
    - un élément de syntaxe *greater_than_one* indiquant si le coefficient considéré est strictement supérieur à 1, si ledit coefficient considéré est non nul ;
    - un élément de syntaxe *greater_than_two* indiquant si le coefficient considéré est strictement supérieur à 2, si ledit élément de syntaxe *greater_than_one* indique que le coefficient considéré est strictement supérieur à 1 ;
    - un élément de syntaxe *remaining_level* indiquant l'amplitude du coefficient, diminuée de 3, si ledit élément de syntaxe *greater_than_two* indique que le coefficient considéré est strictement supérieur à 2,
    au moins un desdits éléments de syntaxe n'ayant pas été codé et étant connu d'un décodeur mettant en œuvre ledit procédé de décodage,

    ledit procédé met en œuvre ce qui suit :

        - détermination (D3) d'une information (reference_trace) représentative du nombre d'éléments de syntaxe dudit bloc déterminés lors du codage, mettant en œuvre :

            - une lecture de ladite information dans ladite partie de signal, ou
            - une déduction de ladite information à partir du nombre d'éléments de syntaxe restant à décoder dans ledit signal, lorsque ledit au moins un bloc est le dernier bloc de l'image,

        - détermination (D4) de la pluralité de toutes les valeurs possibles dudit au moins un élément de syntaxe qui n'a pas été codé, ledit au moins un élément de syntaxe étant nécessaire au décodage du bloc,
        - décodage entropique (D5$_1$, D5$_2$) du bloc à partir de la pluralité de toutes les valeurs possibles dudit au moins un élément de syntaxe, à l'issue duquel est obtenue respectivement une pluralité de quantités d'éléments de syntaxe,
        - comparaison (D6$_1$) de chacune des quantités d'éléments de syntaxe avec le nombre d'éléments de syntaxe dudit bloc,
        - dans le cas où les quantités d'éléments de syntaxe sont différentes l'une de l'autre :

            - sélection (D6$_2$a)) de la quantité d'éléments de syntaxe qui est égale à l'information représentative du nombre d'éléments de syntaxe dudit bloc, et
            - sélection (D6$_3$a)) de la valeur dudit au moins un élément de syntaxe nécessaire au décodage du bloc correspondant à ladite quantité d'éléments de syntaxe sélectionnée,

        - dans le cas où au moins deux quantités d'éléments de syntaxe sont chacune égale à l'information représentative du nombre d'éléments de syntaxe dudit bloc:

            - lecture (D6$_2$b)), dans ladite partie de signal, d'une information (combination_id) représentative de la sélection à appliquer parmi les valeurs dudit au moins un élément de syntaxe nécessaire au décodage du bloc correspondant auxdites au moins deux quantités d'éléments de syntaxe,
            - sélection de la valeur dudit au moins un élément de syntaxe nécessaire au décodage du bloc à partir de l'information lue,

        - reconstruction (D7) dudit bloc à partir de la valeur dudit au moins un élément de syntaxe nécessaire au décodage du bloc sélectionnée.

2. Dispositif (DO) de décodage d'un signal ($\phi$) de données d'image codées, comprenant un circuit de traitement (CT_C) qui, pour au moins une partie ($F_i$) dudit signal contenant un bloc quantifié codé d'au moins une image, ledit bloc comprenant des coefficients quantifiés codés et des éléments de syntaxe associés auxdits coefficients quantifiés codés comprenant au moins des éléments suivants :

- un élément de syntaxe *significant_coeff* indiquant si le coefficient considéré est nul ou non nul,
- un élément de syntaxe *sign* indiquant le signe du coefficient considéré si ledit coefficient considéré est non nul ;
- un élément de syntaxe *greater_than_one* indiquant si le coefficient considéré est strictement supérieur à 1, si ledit coefficient considéré est non nul ;
- un élément de syntaxe *greater_than_two* indiquant si le coefficient considéré est strictement supérieur à 2, si ledit élément de syntaxe *greater_than_one* indique que le coefficient considéré est strictement supérieur à 1 ;
- un élément de syntaxe *remaining_level* indiquant l'amplitude du coefficient, diminuée de 3, si ledit élément de syntaxe *greater_than_two* indique que le coefficient considéré est strictement supérieur à 2,
au moins un desdits éléments de syntaxe n'ayant pas été codé et étant connu dudit dispositif de décodage,
ledit dispositif étant agencé pour :

- déterminer une information (reference_trace) représentative du nombre d'éléments de syntaxe dudit bloc déterminés lors du codage, par :

- lecture de ladite information dans ladite partie de signal, ou
- déduction de ladite information à partir du nombre d'éléments de syntaxe restant à décoder dans ledit signal, lorsque ledit au moins un bloc est le dernier bloc de l'image,

- déterminer la pluralité de toutes les valeurs possibles dudit au moins un élément de syntaxe qui n'a pas été codé, ledit au moins un élément de syntaxe étant nécessaire au décodage dudit bloc,
- décoder entropiquement ledit bloc à partir de la pluralité de toutes les valeurs possibles dudit au moins un élément de syntaxe, à l'issue duquel est obtenue respectivement une pluralité de quantités d'éléments de syntaxe,
- comparer chacune des quantités d'éléments de syntaxe avec le nombre d'éléments de syntaxe dudit bloc,
- dans le cas où les quantités d'éléments de syntaxe sont différentes l'une de l'autre,

- sélectionner la quantité d'éléments de syntaxe qui est égale à l'information représentative du nombre d'éléments de syntaxe dudit bloc, et
- sélectionner la valeur dudit au moins un élément de syntaxe nécessaire au décodage du bloc correspondant à ladite quantité d'éléments de syntaxe sélectionnée,
- dans le cas où au moins deux quantités d'éléments de syntaxe sont chacune égale à l'information représentative du nombre d'éléments de syntaxe dudit bloc :
- lire, dans ladite partie de signal, une information (combination_id) représentative de la sélection à appliquer parmi les valeurs dudit au moins un élément de syntaxe nécessaire au décodage du bloc correspondant auxdites au moins deux quantités d'éléments de syntaxe,
- sélectionner (D6$_2$a)) de la valeur dudit au moins un élément de syntaxe nécessaire au décodage du bloc à partir de l'information lue,

- reconstruire de la valeur dudit au moins un élément de syntaxe nécessaire au décodage du bloc sélectionnée.

**3.** Programme d'ordinateur comportant des instructions pour mettre en œuvre le procédé de décodage selon la revendication 1, lorsque ledit procédé de décodage est exécuté sur un ordinateur.

**4.** Support d'enregistrement lisible par un ordinateur sur lequel est enregistré un programme d'ordinateur comprenant des instructions de code de programme pour l'exécution des étapes du procédé de décodage selon la revendication 1, lorsque ledit programme est exécuté par un ordinateur.

**Patentansprüche**

**1.** Verfahren zur Decodierung eines Signals ($\phi$) aus codierten Bilddaten, wobei, für mindestens einen Teil (F$_i$) des Signals, der einen codierten quantisierten Block mindestens eines Bildes enthält, wobei der Block codierte quantisierte Koeffizienten und den codierten quantisierten Koeffizienten zugeordnete Syntaxelemente umfasst, die mindestens folgende Elemente umfassen:

- ein Syntaxelement *significant_coeff,* das angibt, ob der betrachtete Koeffizient null oder ungleich null ist,
- ein Syntaxelement *sign,* das das Vorzeichen des betreffenden Koeffizienten angibt, wenn der betreffende Koeffizient ungleich null ist;

- ein Syntaxelement *greater_than_one,* das angibt, ob der betrachtete Koeffizient strikt größer als 1 ist, wenn der betrachtete Koeffizient ungleich null ist;
- ein Syntaxelement *greater_than_two,* das angibt, ob der betrachtete Koeffizient strikt größer als 2 ist, wenn das Syntaxelement *greater_than_one* angibt, dass der betrachtete Koeffizient strikt größer als 1 ist;
- ein Syntaxelement *remaining_*level, das die Amplitude des Koeffizienten abzüglich von 3 angibt, wenn das Syntaxelement *greater_than_two* angibt, dass der betrachtete Koeffizient strikt größer als 2 ist,
wobei mindestens eines der Syntaxelemente nicht codiert worden ist und einem Decodierer bekannt ist, der das Decodierungsverfahren durchführt,
das Verfahren Folgendes durchführt:

- Bestimmen (D3) einer Information (reference_trace), die für die Anzahl von Syntaxelementen des Blocks, die bei der Codierung bestimmt wurden, repräsentativ ist, wobei durchgeführt wird:

- ein Lesen der Information in dem Signalteil, oder
- ein Ableiten der Information ausgehend von der Anzahl von Syntaxelementen, die in dem Signal zu decodieren bleiben, wenn der mindestens eine Block der letzte Block des Bildes ist,

- Bestimmen (D4) der Mehrzahl aller möglichen Werte des mindestens einen Syntaxelements, das nicht codiert worden ist, wobei das mindestens eine Syntaxelement zum Decodieren des Blocks erforderlich ist,
- entropische Decodierung (D5$_1$, D5$_2$) des Blocks ausgehend von der Mehrzahl aller möglichen Werte des mindestens einen Syntaxelements, wonach jeweils eine Mehrzahl von Mengen von Syntaxelementen erhalten wird,
- Vergleichen (D6$_1$) jeder der Mengen von Syntaxelementen mit der Anzahl von Syntaxelementen des Blocks,
- wenn die Mengen von Syntaxelementen voneinander verschieden sind:

- Auswählen (D6$_2$a)) der Menge von Syntaxelementen, die gleich der Information ist, die für die Anzahl von Syntaxelementen des Blocks repräsentativ ist, und
- Auswählen (D6$_3$a)) des Werts des mindestens einen zum Decodieren des Blocks erforderlichen Syntaxelements, der der ausgewählten Menge von Syntaxelementen entspricht,

- wenn mindestens zwei Mengen von Syntaxelementen jeweils gleich der Information sind, die für die Anzahl von Syntaxelementen des Blocks repräsentativ ist:

- Lesen (D6$_2$b)), in dem Signalteil, einer Information (combination_id), die für die anzuwendende Auswahl unter den Werten des mindestens einen zum Decodieren des Blocks erforderlichen Syntaxelements repräsentativ ist, die den mindestens zwei Mengen von Syntaxelementen entsprechen,
- Auswählen des Werts des mindestens einen zum Decodieren des Blocks erforderlichen Syntaxelements ausgehend von der gelesenen Information,

- Rekonstruieren (D7) des Blocks ausgehend von dem ausgewählten Wert des mindestens einen zum Decodieren des Blocks erforderlichen Syntaxelements.

2. Vorrichtung (DO) zur Decodierung eines Signals ($\phi$) aus codierten Bilddaten, umfassend eine Verarbeitungsschaltung (CT_C), die, für mindestens einen Teil (F$_i$) des Signals, der einen codierten quantisierten Block mindestens eines Bildes enthält, wobei der Block codierte quantisierte Koeffizienten und den codierten quantisierten Koeffizienten zugeordnete Syntaxelemente umfasst, die mindestens folgende Elemente umfassen:

- ein Syntaxelement *significant_coeff,* das angibt, ob der betrachtete Koeffizient null oder ungleich null ist,
- ein Syntaxelement *sign,* das das Vorzeichen des betreffenden Koeffizienten angibt, wenn der betreffende Koeffizient ungleich null ist;
- ein Syntaxelement *greater_than_one,* das angibt, ob der betrachtete Koeffizient strikt größer als 1 ist, wenn der betrachtete Koeffizient ungleich null ist;
- ein Syntaxelement *greater_than_two,* das angibt, ob der betrachtete Koeffizient strikt größer als 2 ist, wenn das Syntaxelement *greater_than_one* angibt, dass der betrachtete Koeffizient strikt größer als 1 ist;
- ein Syntaxelement *remaining_*level, das die Amplitude des Koeffizienten abzüglich von 3 angibt, wenn das Syntaxelement *greater_than_two* angibt, dass der betrachtete Koeffizient strikt größer als 2 ist,
wobei mindestens eines der Syntaxelemente,

nicht codiert worden ist und der Vorrichtung zur Decodierung bekannt ist,
wobei die Vorrichtung dazu ausgelegt ist:

- eine Information (reference_trace) zu bestimmen, die für die Anzahl von Syntaxelementen des Blocks, die bei der Codierung bestimmt wurden, repräsentativ ist, durch:

- Lesen der Information in dem Signalteil, oder
- Ableiten der Information ausgehend von der Anzahl von Syntaxelementen, die in dem Signal zu decodieren bleiben, wenn der mindestens eine Block der letzte Block des Bildes ist,

- die Mehrzahl aller möglichen Werte des mindestens einen Syntaxelements zu bestimmen, das nicht codiert worden ist, wobei das mindestens eine Syntaxelement zum Decodieren des Blocks erforderlich ist,
- den Blocks ausgehend von der Mehrzahl aller möglichen Werte des mindestens einen Syntaxelements entropisch zu decodieren, wonach jeweils eine Mehrzahl von Mengen von Syntaxelementen erhalten wird,
- jede der Mengen von Syntaxelementen mit der Anzahl von Syntaxelementen des Blocks zu vergleichen,
- wenn die Mengen von Syntaxelementen voneinander verschieden sind,

- die Menge von Syntaxelementen auszuwählen, die gleich der Information ist, die für die Anzahl von Syntaxelementen des Blocks repräsentativ ist, und
- den Wert des mindestens einen zum Decodieren des Blocks erforderlichen Syntaxelements auszuwählen, der der ausgewählten Menge von Syntaxelementen entspricht,

- wenn mindestens zwei Mengen von Syntaxelementen jeweils gleich der Information sind, die für die Anzahl von Syntaxelementen des Blocks repräsentativ ist:

- in dem Signalteil eine Information (combination_id) zu lesen, die für die anzuwendende Auswahl unter den Werten des mindestens einen zum Decodieren des Blocks erforderlichen Syntaxelements repräsentativ ist, die den mindestens zwei Mengen von Syntaxelementen entsprechen,

- den Wert des mindestens einen zum Decodieren des Blocks erforderlichen Syntaxelements ausgehend von der gelesenen Information auszuwählen (D6$_2$a),

- den Wert des mindestens einen zum Decodieren des Blocks erforderlichen Syntaxelements zu rekonstruieren.

**3.** Computerprogramm, das Anweisungen umfasst, die bei der Ausführung des Verfahrens zur Decodierung auf einem Computer das Verfahren zur Decodierung nach Anspruch 1 ausführen.

**4.** Computerlesbares Speichermedium, auf dem ein Computerprogramm gespeichert ist, das Programmcodeanweisungen umfasst, die bei der Ausführung des Programms durch einen Computer die Schritte des Verfahrens zur Decodierung nach Anspruch 1 ausführen.

**Claims**

**1.** Method for decoding a coded-image-data signal ($\phi$), wherein, for at least a portion ($F_i$) of said signal containing a coded quantized block of at least one image, said block comprising coded quantized coefficients and syntax elements associated with said coded quantized coefficients comprising at least some of the following elements:

- a syntax element *significant_coeff* indicating whether the considered coefficient is zero or non-zero,
- a syntax element *sign* indicating the sign of the considered coefficient if said considered coefficient is non-zero;
- a syntax element *greater_than_one* indicating whether the considered coefficient is strictly greater than 1, if said considered coefficient is non-zero;
- a syntax element *greater_than_two* indicating whether the considered coefficient is strictly greater than 2, if said syntax element *greater_than_*one indicates that the considered coefficient is strictly greater than 1;
- a syntax element *remaining_level* indicating the amplitude of the coefficient, minus 3, if said syntax element *greater_than_two* indicates that the considered coefficient is strictly greater than 2,

at least one of said syntax elements not having been coded and being known to a decoder implementing said decoding method,
said method implementing the following:

- determining (D3) an item of information (reference_trace) representative of the number of syntax elements of said block, determined during coding, implementing:

  - reading said item of information from said signal portion, or
  - deducing said item of information based on the remaining number of syntax elements to be decoded in said signal, when said at least one block is the last block of the image,

- determining (D4) the plurality of all possible values of said at least one syntax element that has not been coded, said at least one syntax element being required for decoding the block,
- entropy-decoding ($D5_1$, $D5_2$) the block based on the plurality of all possible values of said at least one syntax element, at the end of which a plurality of quantities of syntax elements are respectively obtained,
- comparing ($D6_1$) each of the quantities of syntax elements with the number of syntax elements of said block,
- if the quantities of syntax elements are different from one another:

  - selecting ($D6_2$a)) the quantity of syntax elements that is equal to the item of information representative of the number of syntax elements of said block, and
  - selecting ($D6_3$a)) the value of said at least one syntax element required for decoding the block corresponding to said selected quantity of syntax elements,

- if at least two quantities of syntax elements are each equal to the item of information representative of the number of syntax elements of said block:

  - reading ($D6_2$b)), from said signal portion, an item of information (combination_id) representative of the selection to be applied from among the values of said at least one syntax element required for decoding the block corresponding to said at least two quantities of syntax elements,
  - selecting the value of said at least one syntax element required for decoding the block based on the read item of information,

- reconstructing (D7) said block based on the selected value of said at least one syntax element required for decoding the block.

2. Device (DO) for decoding a coded-image-data signal ($\phi$), comprising a processing circuit (CT_C) that, for at least a portion ($F_i$) of said signal containing a coded quantized block of at least one image, said block comprising coded quantized coefficients and syntax elements associated with said coded quantized coefficients comprising at least some of the following elements:

  - a syntax element *significant_coeff* indicating whether the considered coefficient is zero or non-zero,
  - a syntax element *sign* indicating the sign of the considered coefficient if said considered coefficient is non-zero;
  - a syntax element *greater_than_one* indicating whether the considered coefficient is strictly greater than 1, if said considered coefficient is non-zero;
  - a syntax element *greater_than_two* indicating whether the considered coefficient is strictly greater than 2, if said syntax element *greater_than_*one indicates that the considered coefficient is strictly greater than 1;
  - a syntax element *remaining_level* indicating the amplitude of the coefficient, minus 3, if said syntax element *greater_than_two* indicates that the considered coefficient is strictly greater than 2,

  at least one of said syntax elements not having been coded and being known to said decoding device,
  said device being designed to:

  - determine an item of information (reference_trace) representative of the number of syntax elements of said block, determined during coding, by:

    - reading said item of information from said signal portion, or
    - deducing said item of information based on the remaining number of syntax elements to be decoded in said signal, when said at least one block is the last block of the image,

  - determine the plurality of all possible values of said at least one syntax element that has not been coded, said at least one syntax element being required for decoding said block,
  - entropy-decode said block based on the plurality of all possible values of said at least one syntax element, at the end of which a plurality of quantities of syntax elements are respectively obtained,

- compare each of the quantities of syntax elements with the number of syntax elements of said block,

- if the quantities of syntax elements are different from one another,

    - select the quantity of syntax elements that is equal to the item of information representative of the number of syntax elements of said block, and

    - select the value of said at least one syntax element required for decoding the block corresponding to said selected quantity of syntax elements,

- if at least two quantities of syntax elements are each equal to the item of information representative of the number of syntax elements of said block:

    - read, from said signal portion, an item of information (combination_id) representative of the selection to be applied from among the values of said at least one syntax element required for decoding the block corresponding to said at least two quantities of syntax elements,

    - select ($D6_2a$)) the value of said at least one syntax element required for decoding the block based on the read item of information,

- reconstruct the selected value of said at least one syntax element required for decoding the block.

3. Computer program comprising instructions for implementing the decoding method according to Claim 1 when said decoding method is executed on a computer.

4. Computer-readable recording medium on which there is recorded a computer program comprising program code instructions for carrying out the steps of the decoding method according to Claim 1 when said program is executed by a computer.

EP 3 409 016 B1

**FIG.1**

$IC_j$

C1 — PARTITION. $IC_j$ / $B_1$, $B_2$, ..., $B_i$...,$B_R$  $1 \leq i \leq R$

C2 — SELECT. BLOC COURANT

$B_i$

C3 — TRANSFORMÉE  $B_i$

$Bt_i$

C4 — QUANT.

$Bq_i$

C5 — **CODAGE**

C51 — CODAGE DES DONNÉES DE $Bq_i$ À L'EXCEPTION D'AU MOINS UNE DONNÉE

C52 — DÉTERMINATION D'UNE INFORMATION REPRÉSENTATIVE D'UNE CARACTÉRISTIQUE DES DONNÉES CODÉES DE $Bq_i$

C6 — ÉLABORATION  PARTIE DE SIGNAL $F_i$ CONTENANT LES DONNÉES  DE $Bq_i$ QUI ONT ÉTÉ CODÉES, À L'EXCEPTION D'AU MOINS UNE DONNÉE

$F_i$

C501 — DÉTERMINATION D'AU MOINS DEUX VALEURS V1 ET V2 DE DÉCODAGE DES DONNÉES DE $Bq_i$

C502

C502$_1$ — DÉCODAGE DES DONNÉES DE $F_i$ À PARTIR DE V1

DÉCODAGE DES DONNÉES DE $F_i$ À PARTIR DE V2 — C502$_2$

Q1    Q2

COMPARAISON Q1, Q2 AVEC L'INFORMATION REPRÉSENTATIVE D'UNE CARACTÉRISTIQUE DE $Bq_i$

C503

O    Q1=Q2 ?    N

C504b) — SÉLECTION DE V1 OU V2 PERMETTANT DE RECONSTRUIRE SANS ERREUR TOUTES LES DONNÉES DE $Bq_{i'}$

SÉLECTION DE Q1/Q2 ÉGALE À L'INFORMATION REPRÉSENTATIVE D'UNE CARACTÉRISTIQUE DE $Bq_{i'}$ — C504a)

C505 — INSERTION DANS LA PARTIE DE SIGNAL $F_i$ INFORMATION $I_C$ REPRÉSENTATIVE DE LA SÉLECTION DE V1 OU V2

**FIG.2**

**FIG.3**

φ: $F_1$, $F_2$,..., $F_i$,...$F_R$

D1 — IDENTIFICATION ENSEMBLES $E_1$, $E_2$,..., $E_i$,..., $E_R$ DE DONNÉES CODÉES ASSOCIÉS A CHACUN DES BLOCS $B_1$, $B_2$,..., $B_i$,..., $B_R$    $1 \leq i \leq R$

$F_i$

D2 — SELECT. ENSEMBLE COURANT $E_i$ DE DONNÉES A DÉCODER

$E_i$

D3 — DÉTERMINATION D'UNE INFORMATION REPRÉSENTATIVE D'UNE CARACTÉRISTIQUE DES DONNÉES CODÉES DE $E_i$

D4 — DÉTERMINATION D'AU MOINS DEUX VALEURS V1 ET V2 DE DÉCODAGE DES DONNÉES DE $Bq_i$

D5

D5₁ — DÉCODAGE DES DONNÉES DE $F_i$ À PARTIR DE V1

D5₂ — DÉCODAGE DES DONNÉESDE $F_i$ À PARTIR DE V2

Q1    Q2    $I_C$

D6 — SÉLECTION DE V1/V2 À PARTIR DE L'INFORMATION REPRÉSENTATIVE D'UNE CARACTÉRISTIQUE DES DONNÉES CODÉES DE $E_i$

D7 — RECONSTRUCTION DES DONNÉES DE $Bq_i$ À PARTIR DE V1 OU V2 SÉLECTIONNÉE

$Bq_i$

D8 — DEQUANT.

$BDq_i$

D9 — TRANSFORMÉE $BDq_i$

$BD_i$

D10 — ÉCRITURE $BD_i$ DANS IMAGE DÉCODÉE $ID_j$

$ID_j$

**FIG.4**

EP 3 409 016 B1

EP 3 409 016 B1

D6

D6$_1$

COMPARAISON Q1, Q2 AVEC L'INFORMATION REPRÉSENTATIVE D'UNE CARACTÉRISTIQUE DES DONNÉES CODÉES DE Bq$_i$

N

Q1=Q2 ?

O

D6$_2$a)

SÉLECTION DE Q1/Q2

LECTURE INFORMATION « combination_id » DANS F$_i$

D6$_2$b)

D6$_3$a)

SÉLECTION DE V1/V2 CORRESPONDANT À Q1/Q2 SÉLECTIONNÉ

**FIG.5**

**FIG.6**

**EP 3 409 016 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2015195568 A